# EUROPÄISCHE PATENTSCHRIFT

(11) **EP 3 163 291 B1**
(45) Veröffentlichungstag und Bekanntmachung des Hinweises auf die Patenterteilung: **24.10.2018**
(21) Anmeldenummer: 16201903.8
(22) Anmeldetag: 02.12.2016
(51) Int. Cl.: G01N 21/3518

(54) **MESSGERÄT ZUR BESTIMMUNG VON KONZENTRATIONEN MEHRERER GASKOMPONENTEN**
MEASURING INSTRUMENT FOR THE DETERMINATION OF CONCENTRATIONS OF SEVERAL GAS COMPONENTS
DISPOSITIF DE MESURE POUR DÉTERMINER LES CONCENTRATIONS DE PLUSIEURS COMPOSANTS GAZEUX

(43) Veröffentlichungstag der Anmeldung: 03.05.2017
(73) Patentinhaber: SICK AG, 79183 Waldkirch (DE)
(72) Erfinder: Disch, Rolf, 79356 Eichstetten (DE)

(56) Entgegenhaltungen:
- EP-A2- 0 349 839
- DE-B3-102009 025 147
- US-A1- 2012 075 632

## Beschreibung

Die Erfindung betrifft ein Messgerät zur Bestimmung von Gaskonzentrationen nach dem Oberbegriff des Anspruchs 1.

Ein solches Messgerät ist aus der DE 10 2009 025 147 B3 und aus der EP 0 349 839 A2 bekannt. Damit werden mehr als eine Gaskomponente nach dem Prinzip der sogenannten Gasfilterkorrelation gemessen. Bei der Gasfilterkorrelation sind mehrere, typischerweise zwei, mechanisch bewegliche Komponenten, nämlich das Filterrad und das Gasküvettenrad, notwendig. Mit den Filtern des Filterrades, typischerweise Interferenzfilter, wird ein bestimmter spektraler Bereich selektiert, und zwar ein Bereich der genau einer Absorption der zu messenden Gaskomponente entspricht. Dann wird eine gasgefüllte Küvette, auch Gasfilter genannt, die mit dem gleichen Gas befüllt ist, das man in der Messgasprobe messen will, in den Strahlengang ein- und ausgeschwenkt. Aus dem Signalunterschied zwischen ein- und ausgeschwenkter Gasküvette kann man die Konzentration der Gaskomponente erhalten, denn bei eingeschwenkter Gasküvette wird das Licht am Ort der Spektrallinien der zu messenden Komponente komplett absorbiert und bei ausgeschwenkter Gasküvette absorbiert lediglich das Messgas.

Nachteil an dieser Realisierung ist, dass mindestens zwei mechanische Komponenten, nämlich Filter- und Küvettenräder, mit entsprechendem Verschleiß und mit zwei Antriebsmotoren und entsprechender Ansteuerung benötigt werden. Das ist aufwändig, kostenträchtig und bedarf entsprechenden Bauraums.

Ausgehend von diesem Stand der Technik ist es Aufgabe der Erfindung, ein verbessertes Messgerät bereitzustellen, mit dem mehrere Gaskomponenten mittels Filterkorrelation und/oder Gasfilterkorrelation gemessen werden können und das die Nachteile vermeidet.

Diese Aufgabe wird mit einem Messgerät mit den Merkmalen des Anspruchs 1 gelöst, nämlich mit
- einem Messgerät zur Bestimmung von Gaskonzentrationen mehrerer Gaskomponenten eines Messgases,
- mit einer Lichtquelle, die Licht in einem Wellenlängenbereich aussendet und deren Lichtstrahlen durch eine Messstrecke geführt sind,
- mit einer Empfangsanordnung, die das Licht der Lichtquelle nach Durchlaufen der Messstrecke empfängt und in Abhängigkeit der auf die Empfangsanordnung einfallenden Lichtintensität Empfangssignale bereitstellt,
- mit einer ein Filterrad aufweisenden, optischen Filtereinheit, mit der wahlweise unterschiedliche optische Filter in den Strahlengang eingebracht werden können,
- mit einer Auswerteeinheit zur Auswertung der Empfangssignale und Bestimmung einer Gaskonzentration daraus.

Erfindungsgemäß ist eine Strahlumlenkeinheit vorgesehen, die den Strahlengang derart umlenkt, dass der Strahlengang das Filterrad zweimal durchtritt und so in wenigstens einer Position des Filterrades zwei der Filter von dem Strahlengang durchtreten sind.

Unter dem Begriff "Filter" sollen in dieser Anmeldung die verschiedensten optischen Komponenten verstanden werden, die eine optische Filterfunktion haben, z.B. Farbfilter, Interferenzfilter, Gasfilter, also mit einem bekannten Gas befüllte Küvetten, oder dergleichen.

Der wesentliche Vorteil ist, dass ein Messgerät bereitgestellt ist, das nur ein einziges Filterrad aufweist, aber dennoch mehrere Gaskomponenten mittels Filterkorrelation und/oder Gasfilterkorrelation messbar sind. Durch die Strahlumlenkung und somit "Doppelnutzung" des Filterrades kann das ansonsten notwendige zweite Filterrad entfallen, wodurch die oben genannten Nachteile vollständig vermieden sind. Damit auch die gewünschten Filterkorrelationen und Gasfilterkorrelationen durchgeführt werden können, muss dabei dafür Sorge getragen werden, dass das Filterrad richtig bestückt ist, also der richtige Filter an richtiger Stelle, so dass für eine Korrelationsmessung jeweils das passende Paar oder die passenden Paare von Filtern und für eine Filterkorrelationsmessung jeweils das entsprechende Filter und eine freie Durchgangsöffnung in den Strahlengang einschwenkbar sind. Die Bestückung des Filterrades, also welcher Filter an welcher Stelle des Filterrades eingesetzt sein muss, ist somit abhängig von der Messaufgabe.

Das Filterrad ist vorteilhafterweise in bekannter Weise als "normales", ebenes Filterrad ausgebildet, was bauraumsparend ist und eine einfache Konstruktion darstellt.

Dann ist es sinnvoll, wenn die Strahlumlenkeinheit vorzugsweise zwei Umlenkspiegel aufweist.

In Weiterbildung der Erfindung weist das Filterrad Durchgangsöffnungen auf, von denen zumindest einige die Filter aufweisen. Es sind also nicht alle Durchgangsöffnungen mit Filtern besetzt, um auch Filterkorrelationsmessungen durchführen zu können. Das Filterrad ist aber so bestückt, dass immer mindestens ein Filter sich im Strahlengang befindet.

Vorteilhafterweise liegen die Durchgangsöffnungen und damit auch die Filter auf gleichem Teilkreis. Dann kann durch einfaches Drehen des Filterrades ein jeweiliges Paar, also Filter und Gasfilterküvette für eine Gasfilterkorrelation oder Filter mit freier Durchgangsöffnung für eine Filterkorrelation, in den Strahlengang geschwenkt werden.

In Erweiterung der Erfindung liegt eine erste Gruppe Durchgangsöffnungen auf einem ersten Teilkreis und eine zweite Gruppe Durchgangsöffnungen auf einem zweiten Teilkreis. Dann ist es möglich, in mehreren Wellenlängenbereichen gleichzeitig zu messen. Das Messgerät kann dann zweikanalig (also mit zwei spektralen Kanälen) ausgebildet sein. Der eine Kanal nutzt die Filter auf dem ersten Teilkreis und der zweite Kanal die Filter auf dem zweiten Teilkreis.

In Weiterbildung der Erfindung kann vom Lichtsender aus gesehen hinter der Messstrecke ein Reflektor angeordnet sein. So wird die Messstrecke von dem Licht zweimal durchlaufen und die gesamte Elektronik mit Sender, Empfänger und Auswertung kann kompakt auf einer Seite der Messstrecke liegen.

Im Folgenden wird die Erfindung anhand von Ausführungsbeispielen unter Bezugnahme auf die Zeichnung im Einzelnen erläutert. In der Zeichnung zeigen:
- Fig. 1: eine schematische Darstellung einer Ausführungsform des erfindungsgemäßen Messgeräts;
- Fig. 2: eine Draufsicht auf eine Ausführungsform des Filterrades;
- Fig. 3: ein Teil einer anderen Ausführungsform des Messgeräts;
- Fig. 4: eine weitere Ausführungsform des Messgeräts;
- Fig. 5: eine Draufsicht auf eine weitere Ausführungsform des Filterrades.

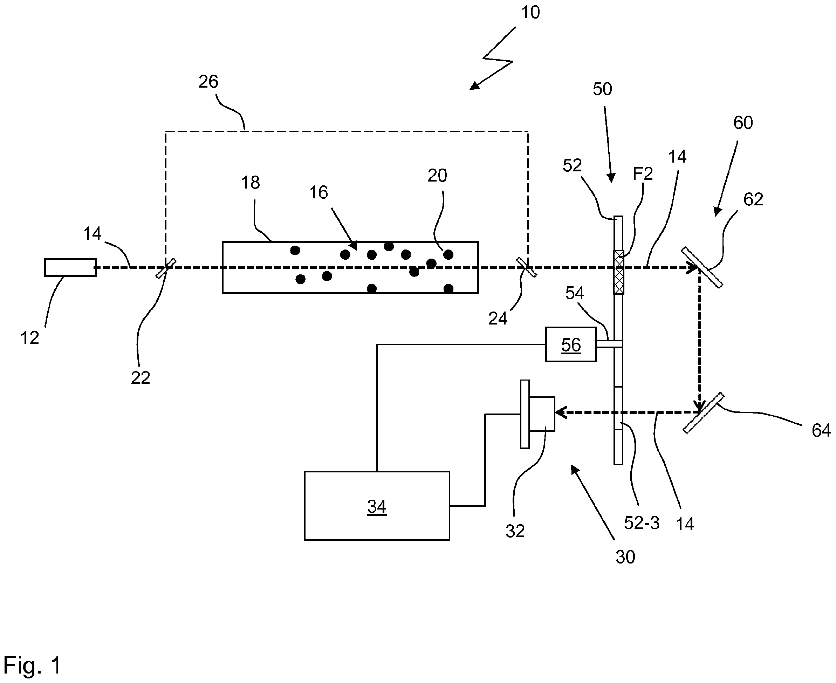

Das erfindungsgemäße Messgerät 10 zur Bestimmung von Gaskonzentrationen umfasst eine Lichtquelle 12, die Licht (Lichtstrahlen 14) aus einem Wellenlängenbereich in eine Messstrecke 16 sendet. Die Messstrecke 16 liegt in diesem Ausführungsbeispiel in einer Messküvette 18. Auf der Messtrecke 16 erfolgt die eigentliche Reaktion des Lichts 14 mit im Bereich der Messstrecke 16 vorgesehenem Messgas (das Messgas ist in Fig. 1 durch Punkte 20 dargestellt), von dem Konzentrationen bestimmter Komponenten bestimmt werden sollen. Das Messgas kann sich dabei in der dargestellten Messküvette 18 oder dergleichen befinden - oder auch in einer freien Strecke eines Abgaskanals.

Nach Durchtritt durch die Messstrecke 16 gelangt das Licht letztendlich in eine Empfangsanordnung 30. Die Empfangsanordnung 30 umfasst einen Lichtempfänger 32, in dem das Licht nachgewiesen wird. Der Empfänger 32 erzeugt in Abhängigkeit des Lichteinfalls Empfangssignale, die zu einer Auswerteeinheit 34 geführt sind und dort gegebenenfalls gespeichert und zur Bestimmung der Gaskonzentrationen ausgewertet werden.

Für notwendige Nullpunktmessungen sind optische Elemente 22 und 24 vorgesehen, so dass der Lichtstrahl 14 zur Umgehung der Messstrecke 16 über einen optischen Pfad 26 entsprechend umgelenkt werden kann. Dabei ist die Darstellung in Fig. 1 nur schematisch zu verstehen zur Erläuterung der Nullpunktmessung über den Pfad 26.

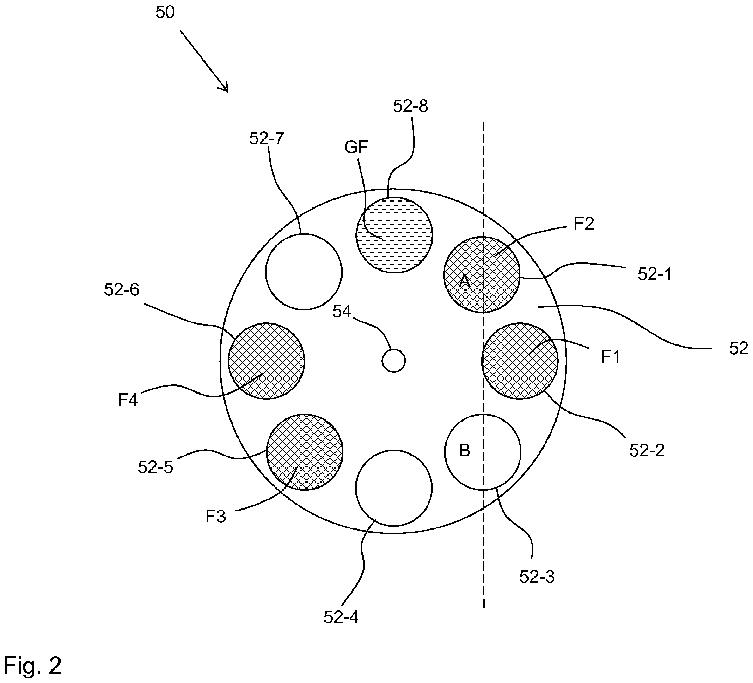

Erfindungsgemäß ist weiter eine optische Filtereinheit 50 vorgesehen, die ein Filterrad 52 aufweist. Das Filterrad ist in Fig. 2 in einer Frontansicht dargestellt und weist Durchgangsöffnungen auf, in diesem Ausführungsbeispiel acht Durchgangsöffnungen 52-1 bis 52-8. Die Durchgangsöffnungen sind entweder offen, in diesem Beispiel die Durchgangsöffnungen 52-3, 52-4 und 52-7, oder nehmen jeweils einen Filter auf. So ist in der Durchgangsöffnung 52-1 ein Interferenzfilter F2, in der Durchgangsöffnung 52-2 ein Interferenzfilter F1, in der Durchgangsöffnung 52-5 ein Interferenzfilter F3, in der Durchgangsöffnung 52-6 ein Interferenzfilter F4 und in der Durchgangsöffnung 52-8 eine Gasfilterküvette GF angeordnet. Unter dem Begriff "Filter" sollen in diesem Zusammenhang die verschiedensten optischen Komponenten verstanden werden, die eine optische Filterfunktion haben. In diesem Ausführungsbeispiel sind das Interferenzfilter und Gasfilter, also mit einem bekannten Gas befüllte Küvetten.

Die Interferenzfilter F1 bis F4 lassen jeweils einen schmalen Wellenlängenbereich um eine betrachtete Absorptionsbande der gesuchten Gaskomponente herum durch.

Weiter erfindungsgemäß ist hinter dem Filterrad 52 eine Strahlumlenkeinheit 60 vorgesehen, die den Strahlengang 14 derart umlenkt, dass der Strahlengang 14 das Filterrad 52 zweimal durchtritt und so in wenigstens einer Stellung des Filterrades 52 zwei der Filter, z.B. GF und F1, von dem Strahlengang 14 durchtreten sind. Dazu weist die Strahlumlenkeinheit 60 in diesem Ausführungsbeispiel wenigstens zwei Umlenkspiegel 62 und 64 auf, die den Strahlengang 14 jeweils um 90° umlenken, wie in Fig. 1 dargestellt.

Das Filterrad 52 ist vorzugsweise wie in den Ausführungsbeispielen nach Fig. 1 bis 3 eben ausgebildet und sitzt auf einer Welle 54 auf, die über einen Motor 56 verdreht werden kann. Auf diese Weise kann immer eine Kombination zweier Durchgangsöffnungen in den Strahlengang 14 geschwenkt werden, wobei der Strahlengang 14 so angeordnet ist, dass immer übernächste Nachbarn in den Strahlengang 14 eingeschwenkt werden können. Dies soll durch die gestrichelte Linie in Fig. 2 angedeutet sein, die dann auch die Schnittebene für die Darstellung des Filterrades 52 in Fig. 1 bildet. Wenn also ein Filter oder Durchgangsöffnung in einer Position A, wie sie in Fig. 2 gezeigt ist, sich befindet, wird es vom Lichtstrahl 14 durchsetzt. Gleiches gilt für Position B. So bilden Filter und Durchgangsöffnungen, die sich jeweils in Position A und B befinden, die vorgenannte Kombination.

Mit den so gewählten Kombinationen von freien Durchgangsöffnungen und mit Filtern besetzten Durchgangsöffnungen können drei Gaskomponenten ermittelt werden, wobei eine mittels Gasfilterkorrelation und die beiden anderen mittels Filterkorrelation ermittelbar sind.

Das soll zur Verdeutlichung im Folgenden beispielhaft näher erläutert sein.

Das Filter F2 sei ein Filter, der einen schmalen Wellenlängenbereich um eine Wasserabsorptionslinie durchlässt. Dann kann in der gezeigten Stellung des Filterrades 52, in der sich Filter F2 in Position A befindet und in Position B eine freie Durchgangsöffnung 52-3 sich befindet, der Wassergehalt als erste Gaskomponente gemessen werden. Die gleiche Messung kann auch erfolgen, wenn das Filter F2 in Position B sich befindet und damit Durchgangsöffnung 52-7 in Position A.

Analoges gilt für Filter F3, das z.B. einen schmalen Wellenlängenbereich einer CO2 Absorption durchlässt, wenn Filter F3 sich in Position A oder B befindet, so dass als zweite Gaskomponente CO2 gemessen werden kann.

Da in der Regel stets eine Referenz benötigt wird, ist Filter F4 ein Referenzfilter, der eine Wellenlänge für eine Referenzmessung durchlässt. Wenn F4 dann in Position B ist, kann die Referenzmessung erfolgen. Dann ist nämlich Position A frei, d.h. es befindet sich die freie Durchgangsöffnung 52-4 in Position A.

Die dritte zu messende Gaskomponente soll CO sein und mittels Gasfilterkorrelation bestimmt werden. Dazu muss das Filterrad 52 in zwei verschiedene Stellungen bewegt werden, in denen jeweils Messungen erfolgen, die in der Auswerteeinheit ausgewertet werden. In der ersten Stellung befindet sich Filter F1, das einen schmalen Wellenlängenbereich um eine CO Absorption herum durchlässt, in Position B und damit befindet sich die mit CO gefüllte Gasfilterküvette GF gleichzeitig in Position A. In der zweiten Stellung des Filterrades 52 befindet sich Filter F1 in Position A und Position B ist damit frei.

In der letzten übrigbleibenden Position des Filterrades 52 befindet sich Filter F4 in Position A und Gasfilterküvette GF in Position B. Diese Kombination lässt keine sinnvolle Messung zu und ist damit wirkungslos.

Die Messungen und Gaskonzentrationsbestimmungen funktionieren selbstverständlich nur, wenn die Auswerteeinheit 42 "weiß", in welcher Stellung das Filterrad 52 momentan ist und bekannt ist, welcher oder welche der Filter in der laufenden Messung in den Strahlengang 14 eingeschwenkt ist. Das Filterrad 52 bzw. der Motor 56 wird dazu von der Auswerteeinheit 34 gezielt angesteuert.

Insgesamt ist damit ein konstruktiv einfaches Messgerät geschaffen, das jedoch eine Vielzahl von Messaufgaben erfüllen kann, nämlich die Bestimmung mehrerer, hier dreier, Gaskomponenten über Filterkorrelation und Gasfilterkorrelation mit nur einem einzigen Filterrad.

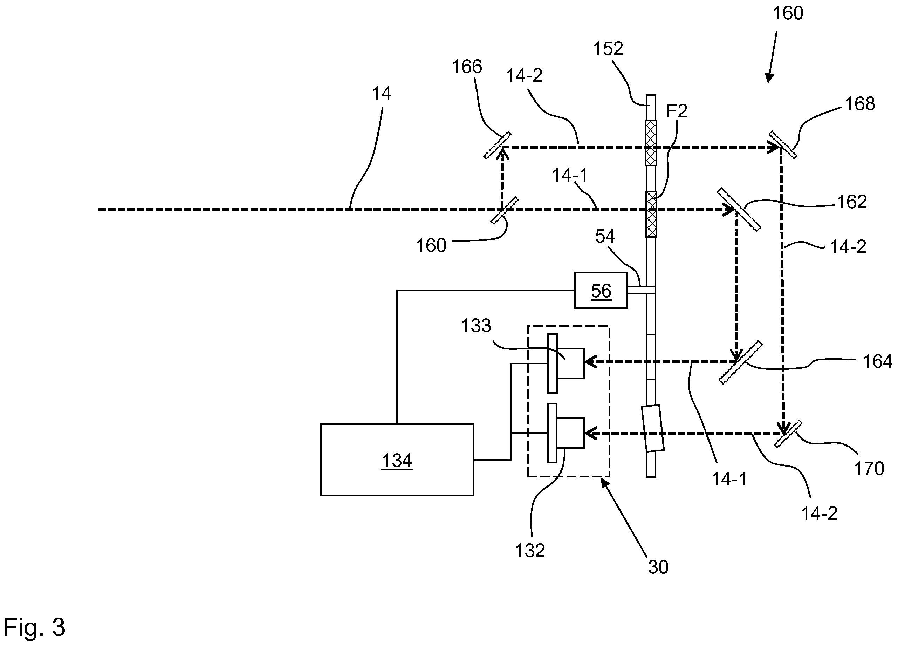

Das erfindungsgemäße Messgerät ist erweiterbar, wenn z.B. mehrere Lichtquellen eingesetzt werden oder mehrere Detektoren mit unterschiedlichen spektralen Empfindlichkeitsbereichen und somit das Messgerät mehrere spektrale Kanäle aufweist. Dann können auf demselben Filterrad weitere Filter und Durchgangsöffnungen vorgesehen sein. Diese weiteren Filter und Durchgangsöffnungen liegen dann aber vorzugsweise auf einem anderen Teilkreis. Dies ist beispielhaft in Fig. 3 dargestellt.

Der Lichtstrahl 14 wird dann zunächst in zwei Teilstrahlen 14-1 und 14-2 mittels eines Strahlteilers 160 aufgeteilt. Der eine Teilstrahl 14-1 durchtritt das Filterrad 152 oder besser die Durchgangsöffnungen bzw. Filter in der oben beschriebenen Weise und wird entsprechend mit der Umlenkeinheit 160 umgelenkt. Damit auch der andere Teilstrahl 14-2 das Filterrad 152 zweimal durchtritt, ist die Strahlumlenkeinheit 160 mit drei zusätzliche Umlenkspiegel 166, 168 und 170 erweitert, die in der dargestellten Weise den Teilstrahl 14-2 entsprechend umlenken, wobei dieser Teilstrahl 14-2 das Filterrad 152 auf einem anderen Teilkreis durchtritt.

Die Teilstrahlen 14-1 und 14-2 werden in der Empfangsanordnung 130 in zwei separaten Empfängern 132 und 133 empfangen, deren Empfangssignale an die Auswerteeinheit 134 geführt sind. In der Auswerteeinheit 134 erfolgt die entsprechende Auswertung und Bestimmung der jeweiligen Gaskomponente, nach den bekannten Methoden der Filterkorrelation und Gasfilterkorrelation.

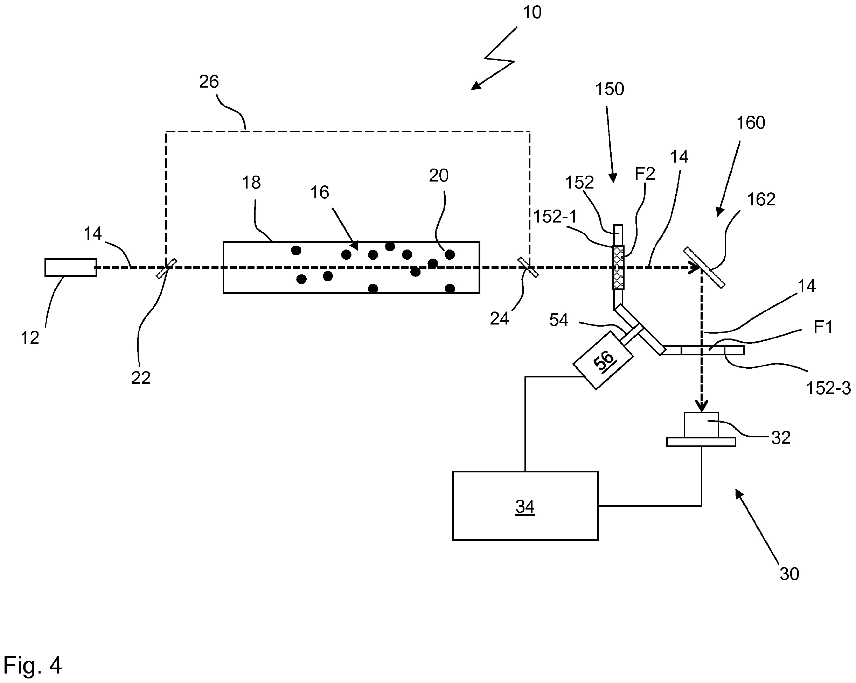

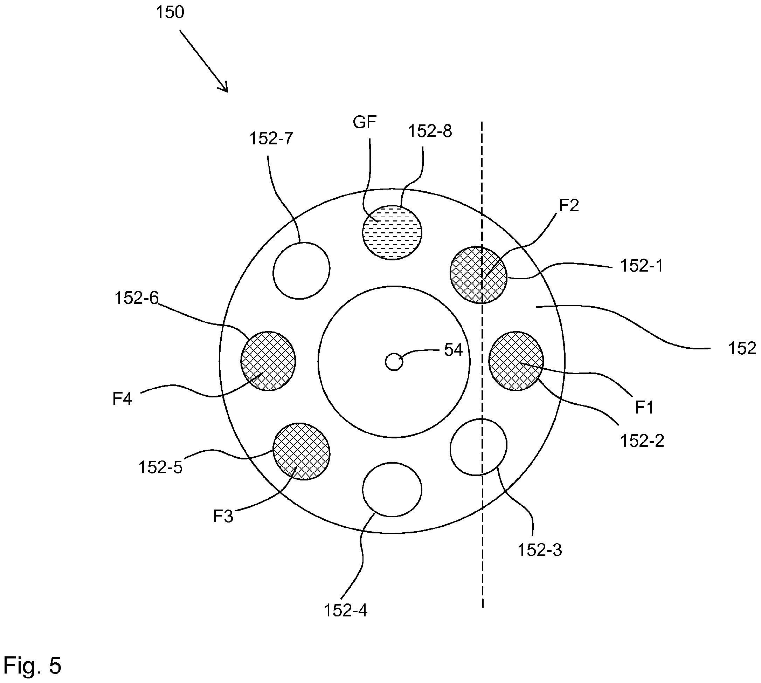

Fig. 4 zeigt eine weitere Ausführungsform, in der das Filterrad 152 anders ausgestaltet ist und in Konsequenz davon auch die Umlenkeinheit 160. Das Filterrad 150 ist jetzt nicht eben ausgebildet, sondern haubenförmig. Es weist wie das Filterrad 50 aus der oben beschriebenen Ausführungsform nach Fig. 1 und 2 Durchgangsöffnungen 152-1 bis 152-8 auf (Fig. 5), die in gleicher Weise mit Filtern F1, F2, F3, F4 und GF (Fig. 5) besetzt sind. Der Lichtstrahl 14 durchsetzt die Durchgangsöffnungen bzw. Filter in analoger Weise, wie dies in Fig. 5 mit der gestrichelten Linie dargestellt ist.

Ein Vorteil dieser Ausführungsform gegenüber den vorherigen Ausführungsformen ist die einfachere Umlenkeinheit 160, die nämlich jetzt aus lediglich einem Umlenkspiegel 162 bestehen kann, was die Justage vereinfacht.

## Patentansprüche

1. Messgerät zur Bestimmung von Gaskonzentrationen mehrerer Gaskomponenten eines Messgases mittels Filterkorrelation und/oder Gasfilterkorrelation
- mit einer Lichtquelle (12), die Licht in einem Wellenlängenbereich aussendet und
- deren Lichtstrahlen (14) entlang eines Strahlengangs durch eine Messstrecke (16) geführt sind,
- mit einer Empfangsanordnung (30; 130), die das Licht der Lichtquelle (12) nach Durchlaufen der Messstrecke (16) empfängt und in Abhängigkeit der auf die Empfangsanordnung (30; 130) einfallenden Lichtintensität Empfangssignale bereitstellt,
- mit einer ein Filterrad (52; 152) aufweisenden, optischen Filtereinheit (50), mit der wahlweise unterschiedliche optische Filter (F1, F2, F3, F4, GF) in den Strahlengang (14) eingebracht werden können,
- mit einer Auswerteeinheit (34) zur Auswertung der Empfangssignale und Bestimmung einer Gaskonzentration daraus und
- mit einer Strahlumlenkeinheit (60; 160),
**dadurch gekennzeichnet,**
**dass** die Strahlumlenkeinheit den Strahlengang (14; 14-1 und 14-2) derart umlenkt, dass der Strahlengang (14; 14-1 und 14-2) das Filterrad (52; 152) zweimal durchtritt und so in wenigstens einer Position des Filterrades (52; 152) zwei der Filter (GF und F1) von dem Strahlengang (14) durchtreten sind.

2. Messgerät nach Anspruch 1, **dadurch gekennzeichnet, dass** das Filterrad eben ausgebildet ist.

3. Messgerät nach einem der vorhergehenden Ansprüche, **dadurch gekennzeichnet, dass** das Filterrad Durchgangsöffnungen aufweist, von denen zumindest einige die Filter aufweisen.

4. Messgerät nach einem der vorhergehenden Ansprüche, **dadurch gekennzeichnet, dass** die Durchgangsöffnungen auf gleichem Teilkreis liegen.

5. Messgerät nach einem der vorhergehenden Ansprüche, **dadurch gekennzeichnet, dass** die Strahlumlenkeinheit wenigstens einen, vorzugsweise zwei Umlenkspiegel aufweist.

6. Messgerät nach einem der vorhergehenden Ansprüche, **dadurch gekennzeichnet, dass** eine erste Gruppe Durchgangsöffnungen auf einem ersten Teilkreis und eine zweite Gruppe Durchgangsöffnungen auf einem zweiten Teilkreis liegen.

## Claims

1. Measuring device for the determination of gas concentrations of several gas components of a measuring gas by means of filter correlation and/or gas filter correlation
- with a light source (12) which emits light in a wavelength range and
- whose light beams (14) are guided along a beam path through a measuring section (16),
- with a receiving arrangement (30; 130) which receives the light of the light source (12) after passing through the measuring section (16) and provides receiving signals depending on the light intensity incident on the receiving arrangement (30; 130),
- with an optical filter unit (50) having a filter wheel (52; 152), with which optionally different optical filters (F1, F2, F3, F4, GF) can be introduced into the beam path (14),
- with an evaluation unit (34) for evaluating the received signals and determining a gas concentration therefrom and
- with a beam deflection unit (60; 160),
**characterized in that**,
- the beam deflecting unit (60; 160) deflects the beam path (14; 14-1 and 14-2) in such a way that the beam path (14; 14-1 and 14-2) passes through the filter wheel (52; 152) twice and two of the filters (GF and F1) are passed through by the beam path (14) in at least one position of the filter wheel (52; 152).

2. Measuring device according to claim 1, **characterized in that** the filter wheel is flat.

3. Measuring device according to one of the preceding claims, **characterized in that** the filter wheel has through openings, at least some of which comprise the filters.

4. Measuring device according to one of the preceding claims, **characterized in that** the through openings lie on the same pitch circle.

5. Measuring device according to one of the preceding claims, **characterized in that** the beam deflection unit has at least one, preferably two, deflection mirrors.

6. Measuring device according to one of the preceding claims, **characterized in that** a first group of through openings lie on a first pitch circle and a second group of through openings lie on a second pitch circle.

## Revendications

1. Dispositif de mesure pour la détermination des concentrations en gaz de plusieurs composants gazeux d'un gaz de mesure par corrélation de filtres et/ou corrélation de filtres à gaz
- avec une source de lumière (12) qui émet de la lumière dans une plage de longueurs d'onde, et
- dont les faisceaux lumineux (14) sont guidés le long d'un trajet de faisceau à travers une section de mesure (16),
- avec un dispositif de réception (30; 130) qui reçoit la lumière de la source lumineuse (12) après avoir traversé la section de mesure (16) et fournit des signaux de réception en fonction de l'intensité lumineuse incidente sur le dispositif de réception (30; 130),
- avec une unité de filtrage optique (50) comportant une roue de filtrage (52; 152), avec laquelle des filtres optiques (F1, F2, F3, F4, F4, GF) différents en option peuvent être introduits dans le trajet du faisceau (14),
- avec une unité d'évaluation (34) pour évaluer les signaux reçus et déterminer une concentration de gaz à partir de ceux-ci, et
- avec une unité de déviation de faisceau (60; 160),
**caractérisé en ce que**,
- l'unité de déviation de faisceau (60; 160) dévie le trajet de faisceau (14; 14-1 et 14-2) de telle sorte que le trajet de faisceau (14; 14-1 et 14-2) traverse deux fois la roue de filtrage (52; 152) et deux des filtres (GF et F1) sont traversés par le trajet de faisceau (14) dans au moins une position de la roue de filtrage (52; 152).

2. Dispositif de mesure selon la revendication 1, **caractérisé en ce que** la roue filtrante est plate.

3. Dispositif de mesure selon l'une des revendications précédentes, **caractérisé en ce que** la roue filtrante présente des ouvertures de passage, dont certaines au moins comprennent les filtres.

4. Dispositif de mesure selon l'une des revendications précédentes, **caractérisé en ce que** les ouvertures traversantes repose sur le même cercle de pas.

5. Dispositif de mesure selon l'une des revendications précédentes, **caractérisé en ce que** l'unité de déviation de faisceau comporte au moins un, de préférence deux, miroirs de renvoi.

6. Dispositif de mesure selon l'une des revendications précédentes, **caractérisé en ce qu'**un premier groupe d'ouvertures traversantes repose sur un premier cercle de pas et un second groupe d'ouvertures repose sur un second cercle de pas.
